# EUROPÄISCHE PATENTSCHRIFT

(11) **EP 1 179 293 B1**
(45) Veröffentlichungstag und Bekanntmachung des Hinweises auf die Patenterteilung: **11.02.2009**
(21) Anmeldenummer: 01115444.0
(22) Anmeldetag: 27.06.2001
(51) Int. Cl.: A01D 67/00, A01B 73/00, B60D 1/44

(54) **Steuervorrichtung einer Koppelstange**
Control device for a drawbar
Dispositif de commande pour un timon d'attelage

(30) Priorität: 08.08.2000 DE 10038595
(43) Veröffentlichungstag der Anmeldung: 13.02.2002
(73) Patentinhaber: DEERE & COMPANY, Moline, Illinois 61265-8098 (US)
(72) Erfinder: Faivre, Damien, 70100 Apremont (FR)
(74) Vertreter: Magin, Ludwig Bernhard

(56) Entgegenhaltungen:
- DE-A- 2 729 811
- GB-A- 628 128
- US-A- 4 558 560
- US-A- 5 199 250
- US-A- 5 642 607

## Beschreibung

Die Erfindung betrifft eine Steuervorrichtung einer Koppelstange eines gezogenen Gerätes mit einem Druckmittelmotor zur Bewegung der Koppelstange zwischen einer ersten und einer zweiten Stellung, insbesondere einer Deichsel quer zu der Arbeitsrichtung des Geräts, und mit einem Ventil zum Betätigen des Druckmittelmotors.

Die US-A-3,919,831 offenbart ein gezogenes Mähgerät mit einer Deichsel, die mittels eines Hydraulikzylinders zwischen Betriebsstellungen und einer Transportstellung verstellbar ist, wobei sich die Deichsel in der Transportstellung quer zu der Arbeitsrichtung des Mähgeräts erstreckt. In der Transportstellung kann das Mähgerät auf einem Anhänger hinter einem Ackerschlepper oder dergl. hergezogen werden. Die Übertragung der Stellbewegung des Hydraulikzylinders erfolgt über ein scherenartiges Gestänge, wobei der Hydraulikzylinder in der Transportstellung eingefahren ist. Die Wirkung des Hydraulikmotors wird von einem zweiten Hydraulikzylinder mitbestimmt, so daß bei vollem Hub des Hydraulikzylinders einmal die Deichsel in ihre Transportstellung gelangt und einmal nicht.

Auch in der US-A-4 558 560 wird eine Steuervorrichtung zum Schwenken einer Deichsel eines Mähgeräts in eine Transportstellung offenbart, die einen Hydraulikzylinder enthält. Der Hydraulikzylinder wirkt auf das Ende der Deichsel und wird in seinem Hub während des Betriebs von mechanischen Anschlägen einer Platte zwischen der Deichsel und einem Rahmen des Mähgeräts begrenzt. Um den Druckmittelmotor ganz einfahren und somit die Deichsel in die Transportstellung schwenken zu können, wird die Platte mit den Anschlägen in eine weitere Stellung geschwenkt.

Aus der US A 5 199 250 geht ein gezogenes Mähgerät hervor, das mittels einer Deichsel an einen Ackerschlepper angeschlossen werden kann und mittels eines Hydraulikmotors zwischen einer Transportstellung hinter dem Ackerschlepper in eine Arbeitsstellung seitlich von ihm bringbar ist. Das sich bewegende Hydraulikzylindergehäuse des Hydraulikmotors wirkt bei seiner Verstellung auf ein Betätigungsglied eines Hydraulikventils.

Das der Erfindung zugrunde liegende Problem wird darin gesehen, daß der Aufwand zum Begrenzen des Hubs des Hydraulikzylinders zu groß ist, um einen zur Transportstellung führenden Hub während des Arbeitsbetriebs zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird zur Feststellung der Koppelstange am Übergang zwischen wenigstens einer ersten und einer zweiter Stellung, z. B. der Arbeits- und der Transportstellung einer Deichsel, der Druckmittelzufluß unterbrochen, und die Koppelstange kann nicht in ihre zweite Stellung gefahren werden. Mechanische Anschläge oder komplizierte Gestänge werden somit vermieden. Darüber hinaus kann durch die Positionierung des Betätigungsglieds bestimmt werden, wo der Arbeitsbereich endet. Die Koppelstange steht allgemein für ein mechanisches Verbindungsglied zwischen zwei Bauteilen und kann in der Form einer Deichsel, einer Strebe, eines Lenkers, eines Stellarms und dergl. ausgebildet werden. Wenn das Betätigungsmittel deaktivierbar ist, indem es z. B. entweder nicht mehr von der Kolbenstange bzw. dem Zylindergehäuse erreichbar ist, oder indem es zwar betätigt wird, aber ein Ausgangssignal unterdrückt oder gar nicht erstellt, kann der Druckmittelmotor die Koppelstange über die Schnittstelle zwischen dem Arbeitsbereich und dem Transportbereich hinaus verstellen, wobei das Hubende des Druckmittelmotors zugleich die Endstellung der Koppelstange bestimmt.

Eine Steuerung und auch Anordnung des Druckmittelmotors derart, daß er ausgefahren wird, wenn er die Koppelstange in eine zweite Stellung schwenkt, hat den Vorteil, daß das Druckmittel auf die größere Fläche eines Kolbens des Druckmittelmotors wirkt und somit mehr Kraft erzeugt.

Auf einfache Weise kann das Betätigungsglied betätigt werden, wenn an eine Kolbenstange des Druckmittelmotors ein Schaltglied, z. B. eine Stange, ein Seil, eine Schiene oder dergleichen vorgesehen ist, das evtl. an dessen Zylindergehäuse geführt ist und den Hub des Druckmittelmotors nicht behindert. Ein solches Schaltglied kann auch veränderbar ausgebildet werden, um den Schaltzeitpunkt zu variieren.

Insbesondere beim Einsatz mit wechselnden Zugfahrzeugen und unter rauhen Bedingungen ist es vorteilhaft, wenn eine Betätigung auf einfache Weise z. B. mittels eines Seilzugs erfolgt. Hierfür kann schon ein einfaches Seil oder auch ein Bodenzug oder dergleichen evtl. auch ein Gestänge genügen.

Eine sehr komfortable Lösung, das Betätigungsglied zu deaktivieren und natürlich auch zu aktivieren, besteht in der elektrisch gesteuerten Betätigung. So kann z. B. mittels Schaltern, Lichtschranken, Reedschaltern oder dergleichen der Stromkreis geschaltet werden. Das Deaktivierungselement kann auch drahtlos ferngesteuert werden.

Um eine häufige und evtl. zu beseitigende Schaltfunktion zu vermeiden, ist das Betätigungsglied so ausgebildet oder angeordnet, daß es nur bei einer Beaufschlagung in einer Richtung wirkt, nämlich dann, wenn es ein totales Ausfahren vermeiden soll. Hingegen wird z. B. mittels eines Freilaufes bei einer Betätigung in der anderen Richtung das Betätigungsglied zwar vielleicht mitgenommen, aber es erstellt kein Signal.

Die Ausbildung des Betätigungsglieds als ein zweiarmiger schwenkbarer Hebel hat den Vorteil, daß ein Arm des Hebels für die Betätigung durch die Kolbenstange oder das Zylindergehäuse und der andere Arm zur Verbindung mit dem Deaktivierungselement dienen kann. Die Schwenkbarkeit ermöglicht es, den Arm in eine Aktiv- und eine Deaktivierungsstellung bei gesicherter Lage zu bringen.

Die Erfindung kann insbesondere nachträglich leicht an vorhandenen Maschinen verwirklicht werden, wenn die betreffenden Teile in einer einzigen Komponente zusammengefaßt sind. Dies kann z. B. dadurch erreicht werden, daß das Schaltglied einenends mit der Kolbenstange verbunden und auf dem Zylindergehäuse geführt ist und endseitig einen Anschlag zur Anlage an dem Betätigungsglied aufweist, während sich das Unterbrecherventil auf dem Zylindergehäuse befindet.

Die Stellbewegung des Druckmittelmotors wird in beiden Richtungen sehr einfach mit einem Rückschlagventil gesteuert, das einen Druckmittelfluß in einer Richtung stets freigibt und in der anderen Richtung stets verhindert.

In der Zeichnung ist ein nachfolgend näher beschriebenes Ausführungsbeispiel der Erfindung dargestellt. Es zeigt:
- Fig. 1: ein Gespann bestehend aus einem Zugfahrzeug und einem gezogenen Gerät in schematischer Darstellung und in Draufsicht,
- Fig. 2: einen hydraulischen Schaltplan für einen Druckmittelmotor zum Betätigen einer Koppelstange des Geräts,
- Fig. 3: den Druckmittelmotor in einer eingefahrenen Stellung,
- Fig. 4: den Druckmittelmotor in einer teils ausgefahrenen Stellung im Bereich des Übergangs zwischen einer ersten und einer zweiten Stellung, bzw. Arbeits- und Transportstellung in Bezug auf die Darstellung in Figur 1 und
- Fig. 5: den Druckmittelmotor in einer ausgefahrenen Stellung.

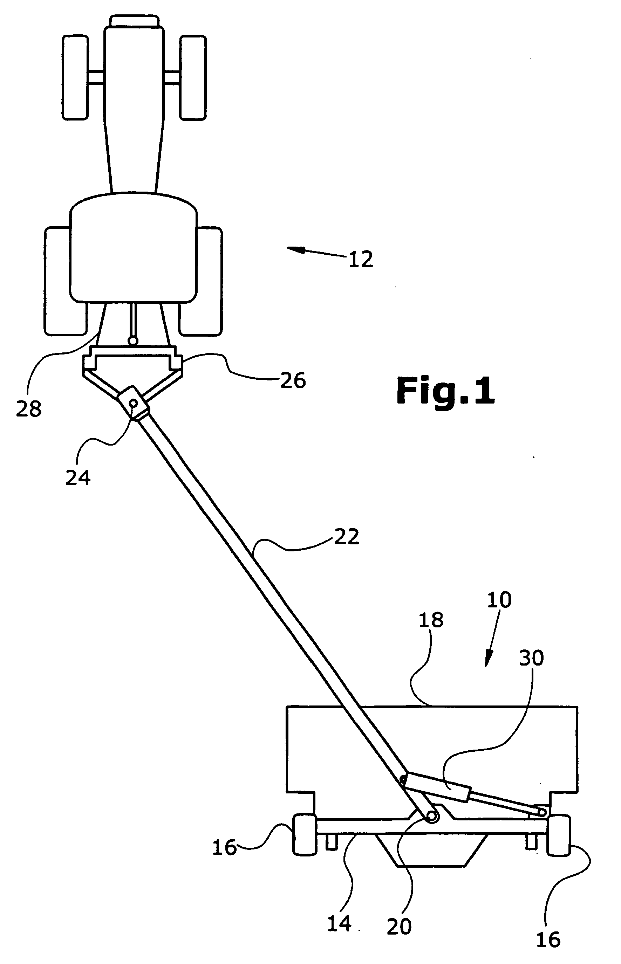

Ein in Figur 1 gezeigtes Gespann enthält ein gezogenes Gerät 10 und ein Zugfahrzeug 12.

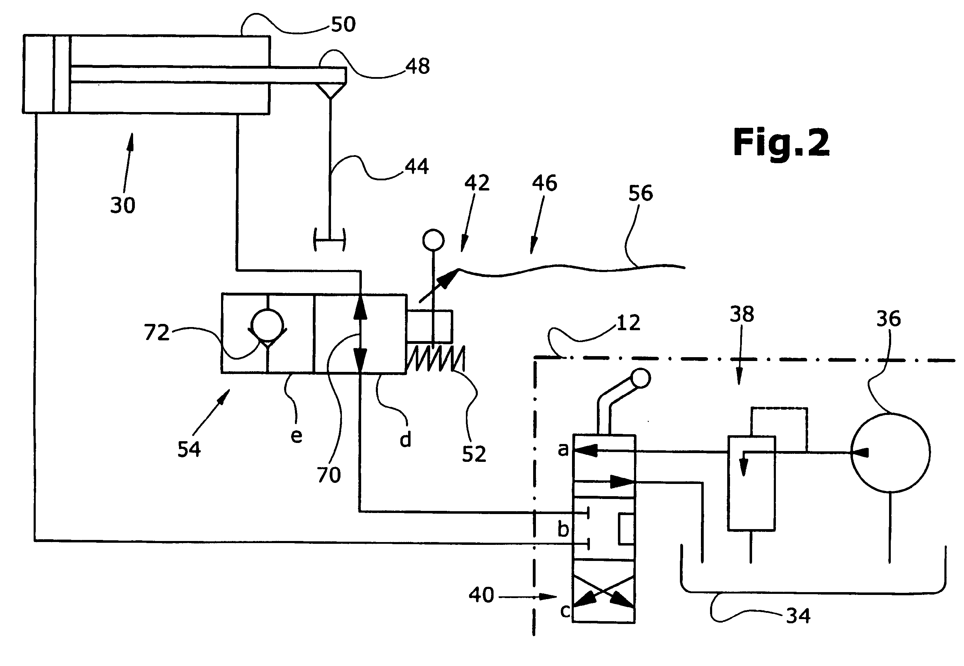

Das Gerät 10 ist als ein Mähgerät ausgebildet, kann jedoch auch ein Bodenbearbeitungs-, Ernte-, Pflanzenbehandlungs- oder sonstiges gezogenes Gerät 10 sein. Das Gerät 10 weist einen Rahmen 14 und diesen auf dem Boden abstützende Räder 16 auf, die einen Vorsatz 18 tragen. An dem Rahmen 14 ist ein Lager 20 vorgesehen, in dem eine als Deichsel ausgebildete Koppelstange 22 angreift, die anderenends über ein Lager 24 und eine Kupplung 26 an eine Gerätekupplung 28 des Zugfahrzeugs 12 angeschlossen ist. Die relative Stellung zwischen der Koppelstange 22 und dem Rahmen 14 wird durch einen Druckmittelmotor 30 eingestellt, zu dessen Betätigung eine in Figur 2 dargestellte Steuervorrichtungen dient.

Eine Deichsel ist nur eine mögliche Form einer Koppelstange 22; statt dessen könnte die Koppelstange 22 auch einen Tragarm für einen Schwader für eine Ernte- oder Erntebergungseinheit oder dergleichen darstellen.

Die Steuervorrichtung enthält einen Vorratsbehälter 34, eine Pumpe 36, ein Druckbegrenzungsventil 38, ein Ventil 40, ein Unterbrecherventil 54, ein Betätigungsglied 42, ein Schaltglied 44 und ein Deaktivierungselement 46.

Der Druckmittelmotor 30 ist doppeltwirkend ausgebildet und enthält eine Kolbenstange 48 und ein Zylindergehäuse 50, in dem die Kolbenstange 48 mit ihrem nicht näher bezeichneten Kolben geradlinig geführt ist.

Die Steuervorrichtung befindet sich teils auf dem Gerät 10 und teils auf dem Zugfahrzeug 12, wobei das Deaktivierungselement 46 zu dem Zugfahrzeug 12 in die Nähe einer Bedienungsperson führt.

Der Vorratsbehälter 34 ist mit Hydraulikflüssigkeit gefüllt, die von der Pumpe 36 über eine nicht näher bezeichnete Leitung angesaugt werden kann.

Die Pumpe 36 ist für ein offenes System ausgebildet und fördert die das Druckmittel bildende Hydraulikflüssigkeit durch das Druckbegrenzungsventil 38 zu dem Ventil 40. Eine Ausbildung als geschlossenes System würde zwar einige Änderungen bedingen, kann aber auch angewandt werden.

Das Druckbegrenzungsventil 38 leitet Druckmittel in den Vorratsbehälter 34 zurück, wenn der Systemdruck eine bestimmte Schwelle überschreitet, z. B. wenn das Ventil 40 offen ist und der Druckmittelmotor 30 seine Endstellung erreicht hat.

Das Ventil 40 ist als ein 4-Anschluß-3-Stellungsventil ausgebildet, das manuell, elektrisch oder hydraulisch gesteuert wird. In einer Einfahrstellung "a" wird Druckmittel von der Pumpe 36 zu dem kolbenstangenseitigen Ende des Zylindergehäuses 50 und aus dem kolbenseitigen Ende des Zylindergehäuses 50 in den Vorratsbehälter 34 gefördert. In einer Neutralstellung "b" wird ein Druckmittelfluß in jeder Richtung unterbunden und das von der Pumpe 36 zugeführte Druckmittel wird in den Vorratsbehälter 34 zurückgefördert. In einer Ausfahrstellung "c" wird Druckmittel von der Pumpe 36 zu dem kolbenseitigen Ende des Zylindergehäuses 50 und aus dem kolbenstangenseitigen Ende des Zylindergehäuses 50 in den Vorratsbehälter 34 gefördert. Selbstverständlich sind auch andere Ausführungsformen des Ventils 40 möglich, z. B. auch voneinander getrennte Ventile, die funktionsmäßig das erreichen, was das Ventil 40 bewirkt.

Das Unterbrecherventil 54 ist als ein Zweistellungs-Zweianschlußventil ausgebildet und kann in eine Schaltstellung "d" mit einem Druckmitteldurchgang 70 und eine Schaltstellung "e" mit einem Rückschlagventil 72 gebracht werden. An dem Unterbrecherventil 54 ist eine Feder 52 vorgesehen, die das Unterbrecherventil 54 stets in seine Stellung "d" mit freiem Druckmitteldurchfluß drängt.

Das Betätigungsglied 42 ist in der Art eines Hebels ausgebildet, was in anderen Ausführungsbeispielen auch anders gelöst werden kann, z. B. mit Nocken, Kipparmen oder dergl. Das Betätigungsglied 42 befindet sich in der Bewegungsbahn des Schaltglieds 44 und kann von diesem während der Verstellung der Kolbenstange 48 verstellt werden. Wenn das Betätigungsglied 42 von dem Schaltglied 44 erfaßt wird, bewegt sich das Unterbrecherventil 54 aus seiner Stellung "d" in seine Stellung "e" und unterbricht den Druckmittelfluß aus dem Druckmittelmotor 30.

Das Deaktivierungselement 46 wird in diesem Ausführungsbeispiel von einem als Seil ausgebildeten Zugmittel 56 gebildet, das auf das Betätigungsglied 42 wirkt. Wenn das Deaktivierungselement 46 betätigt wird, gelangt das Betätigungsglied 42 aus der Bewegungsbahn des Schaltglieds 44, was bewirkt, daß das Unterbrecherventil 54 bis zu einer Verstellung durch die Feder 52 in seiner Stellung "d" verharrt und die Kolbenstange 48 ganz ausgefahren werden kann. Das Zugmittel 56 verläuft von einer Fahrerkabine des Zugfahrzeugs 12 zu dem Betätigungsglied 42. Man kann aber auch einen Hebel vorsehen, an dem das Zugmittel 56 angebracht ist, und das Zugmittel 56 auch als Bowdenzug ausbilden. Der in das Betätigungsglied 42 eingezeichnete Pfeil stellt dessen Verstellbarkeit an sich dar und ist nicht mit einer tatsächlichen Ausführungsform zu verwechseln.

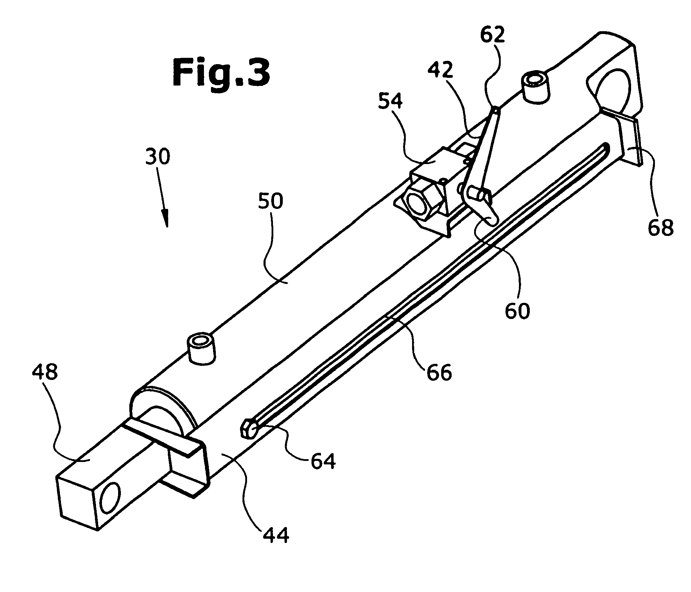

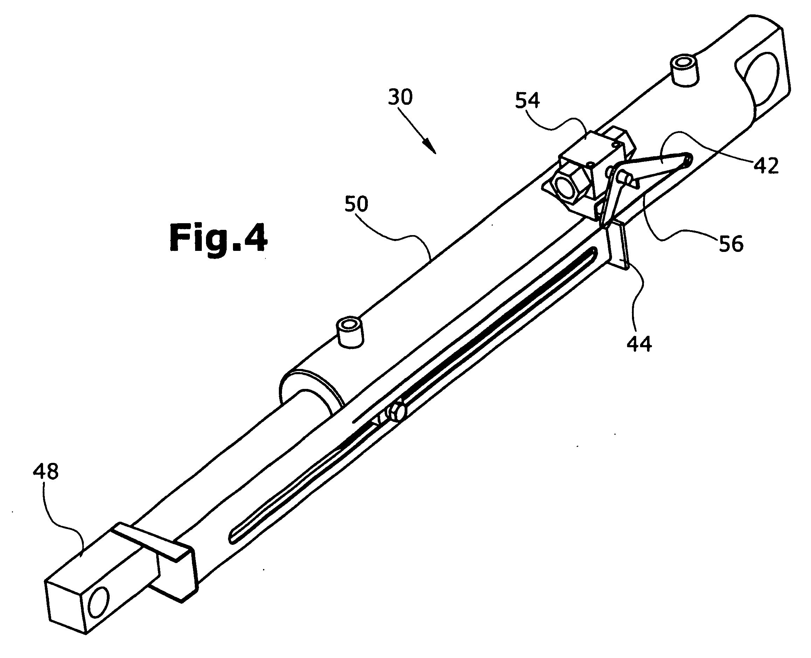

Die Figuren 3 bis 5 zeigen eine tatsächliche Ausführungsform des Druckmittelmotors 30 und der Steuerungsvorrichtung mit dem Unterbrecherventil 54, dem Betätigungsglied 42, dem Schaltglied 44 und dem Deaktivierungselement 46.

Das Unterbrecherventil 54 ist auf das Zylindergehäuse 50 aufgesetzt und zwar zwischen dessen Enden an einer Stelle, die dem Übergangsbereich von der Arbeits- in die Transportstellung entspricht.

Das Betätigungsglied 42 ist als ein an dem Unterbrecherventil 54 schwenkbar gelagerter Hebel mit einem Kontaktarm 60 und einem Betätigungsarm 62 ausgebildet.

Das Schaltglied 44 ist als eine Schiene ausgebildet, die an dem freien Ende der Kolbenstange 48 befestigt ist, einen radialen Abstand zu dieser aufweist und mittels einer Schraube 64 und einem Schlitz 66 auf dem Zylindergehäuse 50 geführt ist. An dem der Befestigung auf der Kolbenstange 48 gegenüberliegenden Ende ist ein Anschlag 68 in der Form einer Platte vorgesehen, der in Deckung mit dem Kontaktarm 60 gelangen kann. Im eingefahrenen Zustand des Druckmittelmotors 30 erstreckt sich das Schaltglied 44 im wesentlichen über die gesamte Länge des Zylindergehäuses 50.

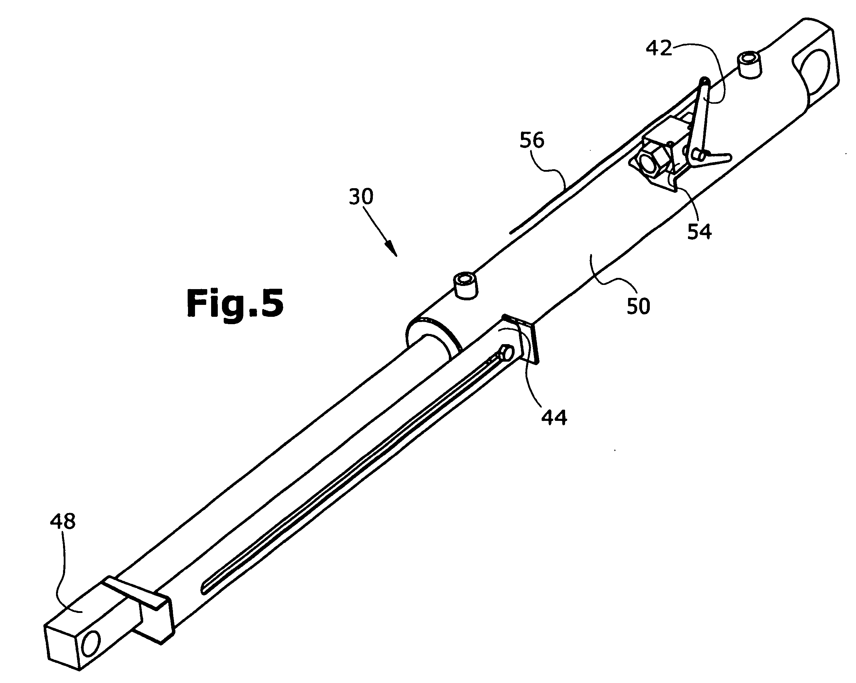

Das als ein einfaches Zugmittel 56 ausgebildete Deaktivierungselement 46 ist an den Betätigungsarm 62 angeschlossen. Wird an dem Zugmittel 56 gezogen, schwenkt das Betätigungsglied 42 in seine in Figur 5 gezeigte Stellung, in der es nicht von dem Anschlag 68 erfaßt werden kann.

Nach alledem ergibt sich folgende Funktion.

Wenn sich das Ventil 40 in seiner Stellung "a" befindet, fährt die Kolbenstange 48 ein, wie dies in Figur 3 gezeigt ist. Der Druckmittelmotor 30 verharrt in dieser Stellung, solange sich das Ventil 40 in seiner Stellung "a" oder "b" befindet.

Um den Druckmittelmotor 30 auszufahren, wird das Ventil 40 in seine Stellung "c" gebracht. Wenn das Deaktivierungselement 42 nicht betätigt wird, kommt das Schaltglied 44, nämlich dessen Anschlag 68, infolge der ausfahrenden Bewegung der Kolbenstange 48 nach einer bestimmten Wegstrecke an dem Kontaktarm 60 zur Anlage, bewegt diesen und verstellt das Unterbrecherventil 54 in seine Stellung "e", in der der Druckmittelfluß unterbrochen wird. Diese Stellung markiert das eine Ende des Arbeitsbereiches, wie es in Figur 1 angedeutet ist.

Soll der Druckmittelmotor 30 ganz ausgefahren werden, wird das Deaktivierungselement 42 vor der Anlage des Anschlags 68 an dem Kontaktarm 60 durch einen Zug des Zugmittels 56 an dem Betätigungsarm 62 betätigt, so daß der Kontaktarm 60 nicht mehr von dem Anschlag 68 beaufschlagt und das Unterbrecherventil 54 nicht mehr in seine Stellung "e" ohne Druckmitteldurchgang gebracht wird. Das Unterbrecherventil 54 verharrt in seiner Stellung "d", das Ventil 40 in seiner Stellung "c" und so fährt der Druckmittelmotor 30 aus, bis er anschlägt und das Druckbegrenzungsventil 38 öffnet. Es sind auch andere Lösungen denkbar, mit denen das Unterbrecherventil 54 sogar während der Anlage des Kontaktarms 60 an dem Anschlag 68 in seine Stellung "d" überführt werden kann und der Druckmittelmotor 30 dann weiter ausfährt.

Während bei diesem Ausführungsbeispiel das Unterbrecherventil 40 bzw. das Betätigungsglied 42 an dem Zylindergehäuse 50 und das Schaltglied 44 an der Kolbenstange 48 vorgesehen ist, kann dies natürlich auch umgekehrt sein. Außerdem könnte das Betätigungsglied 42 an dem Rahmen 14 oder dergleichen vorgesehen werden; wesentlich ist, daß das Betätigungsglied 42 mit dem Verstellweg des Druckmittelmotors 30 in Verbindung gebracht werden kann.

Das Betätigungsglied 42 ist zudem so ausgebildet, daß es in einer Richtung, nämlich wenn die Kolbenstange 48 eingefahren wird, zwar beaufschlagt werden kann, aber aufgrund eines Freilaufs oder dergleichen keine Schaltbewegung hervorruft.

## Patentansprüche

1. Steuervorrichtung (32) einer Koppelstange (22) eines gezogenen Gerätes (10) mit einem Druckmittelmotor (30) zur Bewegung der Koppelstange (22) zwischen einer ersten und einer zweiten Stellung, insbesondere einer Deichsel quer zu der Arbeitsrichtung des Geräts (10), und mit einem Ventil (40) zum Betätigen des Druckmittelmotors (30), **gekennzeichnet durch** ein in den Druckmittelfluß eingefügtes Unterbrecherventil (54), das abhängig von der relativen Stellung zwischen einer Kolbenstange (48) und einem diese aufnehmenden Zylindergehäuses (50), schaltbar ist und **durch** ein Betätigungsglied (42), das auf das Unterbrecherventil (54) wirkt und mittels eines Deaktivierungselements (46) wirkungslos gemacht werden kann.

2. Steuervorrichtung nach Anspruch 1, **dadurch gekennzeichnet, daß** der Druckmittelmotor (30) derart angeordnet ist, daß er zum Bewegen der Koppelstange (22) in die zweite Stellung ausgefahren wird.

3. Steuervorrichtung nach einem oder mehreren der vorherigen Ansprüche, **dadurch gekennzeichnet, daß** das Betätigungsglied (42) mittels eines mit der Kolbenstange (48) verbundenen Schaltglieds (44) betätigbar ist.

4. Steuervorrichtung nach einem oder mehreren der vorherigen Ansprüche, **dadurch gekennzeichnet, daß** das Deaktivierungselement (46) mittels eines Zugmittels (56) oder eines Zug-Druckmittels betätigbar ist.

5. Steuervorrichtung nach einem oder mehreren der vorherigen Ansprüche, **dadurch gekennzeichnet, daß** das Betätigungsglied (42) elektrisch deaktivierbar ist.

6. Steuervorrichtung nach einem oder mehreren der vorherigen Ansprüche, **dadurch gekennzeichnet, daß** das Betätigungsglied (42) bei einer Betätigung in einer Richtung kein Ausgangssignal liefert.

7. Steuervorrichtung nach einem oder mehreren der vorherigen Ansprüche, **dadurch gekennzeichnet, daß** das Betätigungsglied (42) als ein zweiarmiger schwenkbarer Hebel ausgebildet ist.

8. Steuervorrichtung nach einem oder mehreren der vorherigen Ansprüche, **dadurch gekennzeichnet, daß** das Betätigungsglied (42) mittels eines mit der Kolbenstange (48) verbundenen Schaltglieds (44) betätigbar ist, das einenends mit der Kolbenstange (48) verbunden und auf dem Zylindergehäuse (50) geführt ist und an dem anderen Ende einen Anschlag (68) zur Anlage an dem Betätigungsglied (42) aufweist, wobei sich das Unterbrecherventil (54) auf dem Zylindergehäuse (50) befindet.

9. Steuervorrichtung nach einem oder mehreren der vorherigen Ansprüche, **dadurch gekennzeichnet, daß** das Unterbrecherventil (54) ein Rückschlagventil (72) enthält und zwischen dem Druckmittelmotor (30) und einem Ventil (40) zur Steuerung des Druckmittelmotors (30) vorgesehen ist.

## Claims

1. Control device (32) for a draw bar (22) of a pulled implement (10), with a pressure medium motor (30) for moving the draw bar (22) between a first and a second position, in particular a tow bar transversely with respect to the working direction of the implement (10), and with a valve (40) for actuating the pressure medium motor (30), **characterized by** a breaker valve (54) which is fitted into the flow of pressure medium and can be switched as a function of the relative position between a piston rod (48) and a cylinder housing (50) accommodating the latter, and by an actuating element (42) which acts on the breaker valve (54) and can be rendered ineffective by means of a deactivation element (46).

2. Control device according to Claim 1, **characterized in that** the pressure medium motor (30) is arranged in such a manner that it is extended in order to move the draw bar (22) into the second position.

3. Control device according to one or more of the preceding claims, **characterized in that** the actuating element (42) can be actuated by means of a switching element (44) connected to the piston rod (48).

4. Control device according to one or more of the preceding claims, **characterized in that** the deactivation element (46) can be actuated by means of a pull means (56) or a pull-push means.

5. Control device according to one or more of the preceding claims, **characterized in that** the actuating element (42) can be deactivated electrically.

6. Control device according to one or more of the preceding claims, **characterized in that** the actuating element (42) does not supply any output signal when actuated in one direction.

7. Control device according to one or more of the preceding claims, **characterized in that** the actuating element (42) is designed as a two-armed, pivotable lever.

8. Control device according to one or more of the preceding claims, **characterized in that** the actuating element (42) can be actuated by means of a switching element (44) which is connected to the piston rod (48), said switching element being connected at one end to the piston rod (48) and being guided on the cylinder housing (50) and at the other end having a stop (68) for bearing on the actuating element (42), with the breaker valve (54) being located on the cylinder housing (50).

9. Control device according to one or more of the preceding claims, **characterized in that** the breaker valve (54) contains a nonreturn valve (72) and is provided between the pressure medium motor (30) and a valve (40) for controlling the pressure medium motor (30).

## Revendications

1. Dispositif de commande (32) d'une barre d'attelage (22) d'un engin remorqué (10), comprenant un moteur à fluide sous pression (30) pour le déplacement de la barre d'attelage (22) entre une première et une deuxième position, en particulier d'un timon transversalement à la direction de travail de l'engin (10), et comprenant une soupape (40) pour l'actionnement du moteur à fluide sous pression (30), **caractérisé par** une soupape de coupure (54) insérée dans le flux de fluide sous pression, qui peut être commutée en fonction de la position relative entre une tige de piston (48) et un boîtier de cylindre (50) la recevant, et par un organe d'actionnement (42) qui agit sur la soupape de coupure (54) et qui peut être rendu inactif au moyen d'un élément de désactivation (46).

2. Dispositif de commande selon la revendication 1, **caractérisé en ce que** le moteur à fluide sous pression (30) est disposé de telle sorte qu'il puisse être sorti pour déplacer la barre d'attelage dans la deuxième position (22).

3. Dispositif de commande selon l'une quelconque ou plusieurs des revendications précédentes, **caractérisé en ce que** l'organe d'actionnement (42) peut être actionné au moyen d'un organe de commutation (44) connecté à la tige de piston (48).

4. Dispositif de commande selon l'une quelconque ou plusieurs des revendications précédentes, **caractérisé en ce que** l'élément de désactivation (46) peut être actionné par un moyen de traction (56) ou d'un moyen de traction-compression.

5. Dispositif de commande selon l'une quelconque ou plusieurs des revendications précédentes, **caractérisé en ce que** l'organe d'actionnement (42) peut être désactivé électriquement.

6. Dispositif de commande selon l'une quelconque ou plusieurs des revendications précédentes, **caractérisé en ce que** l'organe d'actionnement (42) ne fournit aucun signal de sortie dans le cas d'un actionnement dans une direction.

7. Dispositif de commande selon l'une quelconque ou plusieurs des revendications précédentes, **caractérisé en ce que** l'organe d'actionnement (42) est réalisé sous forme d'un levier pivotant à deux bras.

8. Dispositif de commande selon l'une quelconque ou plusieurs des revendications précédentes, **caractérisé en ce que** l'organe d'actionnement (42) peut être actionné au moyen d'un organe de commutation (44) connecté à une extrémité à la tige de piston (48), et guidé sur le corps de cylindre (50) et présentant à l'autre extrémité une butée (68) pour s'appliquer contre l'organe d'actionnement (42), la soupape de coupure (54) se trouvant sur le corps de cylindre (50).

9. Dispositif de commande selon l'une quelconque ou plusieurs des revendications précédentes, **caractérisé en ce que** la soupape de coupure (54) contient un clapet anti-retour (72) et est prévue entre le moteur à fluide sous pression (30) et une soupape (40) pour commander le moteur à fluide sous pression (30).
